# EUROPEAN PATENT APPLICATION

(11) **EP 4 844 464 A1**
(43) Date of publication of application: **25.11.2026**
(21) Application number: 26179481.2
(22) Date of filing: 19.05.2026
(51) Int. Cl.: G02B 6/43, G02B 6/12

(54) **INTEGRATED HIGH-DENSITY INP/GAAS OPTOELECTRONIC ARRAYS WITH EMBEDDED DENSE E/O INTERCONNECTS**

(30) Priority: 19.05.2025 US 202563808357 P; 15.05.2026 US 202619679211
(71) Applicant: II-VI Delaware, Inc., Wilmington, DE 19890 (US)
(72) Inventor: Tatarczak, Anna, Wilmington, 19890 (US); Chen, Young-Kai, Wilmington, 19890 (US); Eng, Julie, Wilmington, 19890 (US)
(74) Representative: Bosch Jehle Patentanwaltsgesellschaft mbH

(57) **Abstract**

This disclosure describes systems and methods for co-packaged optics (CPO) with an electro optical assembly that may be used as data-center interconnects. Such CPO may comprise high-density InP or GaAs modulator arrays heterogeneously integrated onto multi-layer substrates with embedded silicon interposer routing.

## Description

### CROSS REFERENCE TO RELATED APPLICATIONS

This application claims priority to and the benefit of U.S. Provisional Patent Application No. 63/808,357 entitled "Integrated High-Density InP/GaAs Optoelectronic Arrays with Embedded Dense E/O Interconnects" filed May 19, 2025, which is hereby incorporated herein by reference in its entirety.

### BACKGROUND

Limitations and disadvantages of traditional optical semiconductors will become apparent to one of skill in the art, through comparison of such approaches with some aspects of the present method and system set forth in the remainder of this disclosure with reference to the drawings.

### BRIEF SUMMARY

Systems and methods are provided for co-packaged optics (CPO) with an electro optical assembly for data-center interconnects, and more particularly to high-density InP or GaAs modulator arrays heterogeneously integrated onto multi-layer substrates with embedded silicon interposer routing, substantially as illustrated by and/or described in connection with at least one of the figures, as set forth more completely in the claims.

### BRIEF DESCRIPTION OF THE DRAWINGS

FIG. 1 illustrates a side view of an example compound semiconductor co-packaged optics (CCPO) photonic integrated circuit (PIC), in accordance with various example implementations of this disclosure.
FIG. 2 illustrates a top view of an example CCPO PIC implemented in InP, in accordance with various example implementations of this disclosure.
FIG. 3 illustrates a top view of an example CCPO PIC implemented in GaAs, in accordance with various example implementations of this disclosure.
FIGs. 4A and 4B illustrate side views of exemplary transmitters, in accordance with various example implementations of this disclosure.
FIGs. 5A, 5B, 5C and 5D illustrate side views of exemplary receivers, in accordance with various example implementations of this disclosure.
FIG. 6 illustrates a top view of an example CPO comprising modulator arrays on top of an interposer comprising silicon PDs, in accordance with various example implementations of this disclosure.
FIG. 7 illustrates a top view of an example CPO comprising modulator arrays and PD arrays on top of an interposer, in accordance with various example implementations of this disclosure.
FIG. 8 illustrates a side view of an example transmitter comprising a 3D stack with the modulator array on top of the xPU where an interposer is below the xPU, in accordance with various example implementations of this disclosure.
FIG. 9 illustrates a side view of an example transmitter comprising a 3D stack with the modulator array below the xPU where an interposer is below the xPU and above the modulator array, in accordance with various example implementations of this disclosure.
FIG. 10 illustrates an example staggered modulator array, in accordance with various example implementations of this disclosure.
FIG. 11 illustrates an example modulator for Dense Wavelength Division Multiplexing (DWDM), in accordance with various example implementations of this disclosure.

### DETAILED DESCRIPTION

The following discussion provides various examples of systems and methods for producing integrated compound semiconductor co-packaged optics. Such examples are non-limiting, and the scope of the appended claims should not be limited to the particular examples disclosed. In the following discussion, the terms "example" and "e.g." are non-limiting.

The figures illustrate the general manner of construction, and descriptions and details of well-known features and techniques may be omitted to avoid unnecessarily obscuring the present disclosure. In addition, elements in the drawing figures are not necessarily drawn to scale. For example, the dimensions of some of the elements in the figures may be exaggerated relative to other elements to help improve understanding of the examples discussed in the present disclosure. The same reference numerals in different figures denote the same elements.

The term "or" means any one or more of the items in the list joined by "or". As an example, "x or y" means any element of the three-element set {(x), (y), (x, y)}. As another example, "x, y, or z" means any element of the seven-element set {(x), (y), (z), (x, y), (x, z), (y, z), (x, y, z)}.

The terms "comprises," "comprising," "includes," and/or "including," are "open ended" terms and specify the presence of stated features, but do not preclude the presence or addition of one or more other features.

The terms "first," "second," etc. may be used herein to describe various elements, and these elements should not be limited by these terms. These terms are only used to distinguish one element from another. Thus, for example, a first element discussed in this disclosure could be termed a second element without departing from the teachings of the present disclosure.

Unless specified otherwise, the term "coupled" may be used to describe two elements directly contacting each other or describe two elements indirectly connected by one or more other elements. For example, if element A is coupled to element B, then element A can be directly contacting element B or indirectly connected to element B by an intervening element C. Similarly, the terms "over" or "on" may be used to describe two elements directly contacting each other or describe two elements indirectly connected by one or more other elements.

The integrated compound semiconductor co-packaged optics (CCPO or compound CPO), disclosed herein, are designed to transport high-capacity electronic data traffic from an electronic hyper-scale integrated circuit device (HSIC) into an optical interconnect. The disclosed CCPO photonic integrated circuit (PIC) may be implemented in indium phosphide (InP), gallium arsenide (GaAs) substrates, and/or other materials (e.g., TFLN), depending on the targeted operating wavelength and/or the length of fiber links.

The disclosed systems may comprise heterogeneous integration of compound semiconductor layers onto silicon interposers, embedded routing structures, optical coupling mechanisms and thermal management structures. These features may enable high-density, high-speed optical interconnects suitable for data-center and high-performance computing applications.

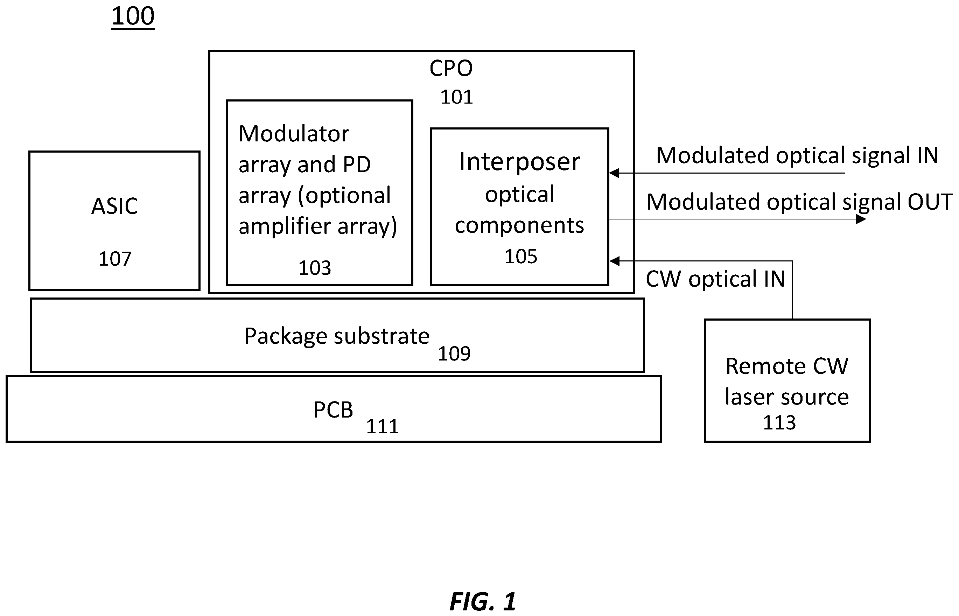

FIG. 1 (100) illustrates a side view of an example co-packaged optics device. The device 100 comprises co-packaged optics module 101 that may comprise a compound semiconductor photonic integrated circuit. Co-packaged optics module 101 is positioned in proximity to electronic integrated circuit 107, which may comprise a hyperscale integrated circuit device such as a GPU, CPU, TPU, or memory controller. Both co-packaged optics module 101 and electronic integrated circuit 107 are mounted on package substrate 109, which in turn may optionally be mounted on printed circuit board 111. Optical coupling elements may be integrated in native material (e.g., InP, Gas, TFLN, Si, SiN and others). Co-packaged optics module 101 comprises modulator and/or photodetector array 103 configured to generate and/or detect optical signals. Optical coupling elements 105 are coupled to the co-packaged optics module 101 and are configured to couple light between co-packaged optics module 101 and external optical media. Optical coupling elements 105 may include grating couplers, edge couplers, multiplexers, or polarization control elements. Light source 113 may provide optical power to the co-packaged optics module 101 and may be located remotely or integrated within the package. Electrical signals are transferred between electronic integrated circuit 107 and co-packaged optics module 101 through package substrate 109.

In some implementations, modulator arrays 103 may be formed in InP, GaAs, and/or other materials (e.g., TFLN) and may be arranged in a staggered, high-density layout in which individual modulators are laterally shifted relative to one another. This staggered configuration may enable a wide range of packing density, for example greater than or equal to approximately 10 lanes per mm, and in some implementations greater than or equal to approximately 16 lanes per mm, while maintaining sufficient spacing and isolation to reduce optical and electrical crosstalk between adjacent channels. In some implementations, densities in a range of approximately 10 to 30 lanes per mm, and in other implementations greater than approximately 30 lanes per mm, may be achieved depending on fabrication tolerances, coupling constraints and thermal limits. For example, channel spacing with GaAs may be as low as 5 µm.

In some implementations, continuous-wave laser source 113 may be coupled into interposer 105, either from a remote location or from an on-die source. Optical signals from laser source 113 may be distributed across multiple modulation channels using optical splitting structures integrated within or coupled to interposer 105. For example, multi-mode interference splitters or equivalent structures may distribute substantially equal optical power to each modulator in modulator arrays 103. In some implementations, a single laser source may support at least 2 lanes, at least 4 lanes, at least 8 lanes, or at least 16 lanes, and in some implementations may support a range of approximately 4 to 32 lanes or more.

Interposer 105 may comprise a thermal material that may be embedded. An electrical fly-over cable may be added onto interposer 105 to supply electrical channels to interposer 105. The modulators in modulator array 103 may comprise a Mach-Zehnder modulator (MZM), an electro-absorption modulator (EAM), a differential EAM, or a directly modulated laser.

In some implementations, three-dimensional integration techniques may be employed in which modulator arrays or photodetector arrays 103 are positioned on a top surface or a bottom surface of interposer 105 relative to the electronic processing unit 101. Electrical interconnects, for example through-interposer vias, may be used to provide vertical routing between electronic processing unit 101 and the optical components. In some implementations, via diameters may be less than approximately 30 µm, and in some implementations less than approximately 20 µm, with via pitch in a range of approximately 20 µm to 80 µm, and in some implementations less than approximately 50 µm to support high-density interconnection. Some implementations may comprise larger via pitches (e.g., 350 µm or above).

In some implementations, photonic signal-processing functions may be integrated within interposer 105 and coupled to the waveguides.

These functions may include wavelength-division multiplexing and demultiplexing structures, optical filters, polarization control elements, non-linear optical components and adaptive optical elements.

Optical signals propagating through the waveguides may be processed by these elements to support multi-wavelength operation, for example supporting at least 2 wavelengths, at least 4 wavelengths, at least 8 wavelengths, or in some implementations a range of approximately 4 to 32 wavelength channels per waveguide.

In some implementations, thermal management and monitoring structures may be integrated within interposer 105 and surrounding package. Heat spreaders (e.g., Thermadite), micro heat sinks, or other thermal dissipation elements may be incorporated to manage heat generated by electronic processing unit 101 and optical components. In some implementations, operating temperatures may be maintained below approximately 125°C, and in some implementations below approximately 105°C, and in other implementations within a range of approximately 60°C to 110°C without active cooling. Monitoring photodetectors, which may be implemented using photodetector arrays 103, may be used to sample optical signals to provide feedback regarding optical power, signal integrity, or phase characteristics.

In some implementations, the electrical interface of electronic processing unit 101 may be application specific and may vary depending on system requirements. In typical implementations, the electrical interface comprises differential signaling with a voltage swing less than approximately 1 Vpp. For example, if voltage is low (e.g., below 1V), the SerDes may drive directly, and if voltage is high (e.g., at or above 1V), a driver may be necessary. The number of lanes, impedance characteristics and signaling format may be selected based on the performance targets of the system, such as bandwidth density and power efficiency.

In some implementations, each electrical lane may be mapped to a respective modulator in modulator array 103 in a one-to-one configuration. In other implementations, a single electrical lane may be split into multiple lower-bandwidth modulation paths, for example using a gearbox architecture in which one high-speed electrical signal is distributed across multiple modulators. Such configurations may enable flexibility in balancing bandwidth, power consumption and device performance.

In some implementations, wavelength multiplexing may not be performed prior to modulation at a single modulator. However, different modulators within modulator array 103 may be configured to operate at different wavelengths. Multiplexing and demultiplexing functions may be performed on-chip, for example using integrated photonic signal-processing elements within interposer 105 or associated waveguides. Wavelength-division multiplexing may be achieved across multiple modulators rather than within a single modulation path.

In some implementations, optical input to modulator array 103 may be provided either by a dedicated light source per modulation lane or by a shared light source distributed across multiple lanes. For example, continuous-wave laser source 113 may supply optical power to a plurality of modulators, such as four or more lanes, although other groupings may be used. In other implementations, each modulator may be paired with its own laser source.

In implementations in which laser source 113 is used to serve multiple modulators, optical power may be distributed using optical splitting structures, such as silicon waveguide-based splitters formed within or coupled to interposer 105. These splitting structures may provide substantially equal optical power to each modulator in modulator array 103.

In some implementations, interposer 105 may comprise a variety of materials and structures, for example silicon interposers, organic substrates, glass substrates, or combinations thereof. The selection of interposer material may depend on factors such as electrical performance, thermal characteristics, manufacturing cost, and integration complexity.

In some implementations, electrical signals may be routed from electronic processing unit 101 to modulator array 103 using a variety of physical interconnect structures, for example embedded metal routing layers within interposer 105, vertical vias, and conductive structures such as copper pillars.

In configurations in which driver circuitry is positioned directly above or adjacent to modulator array 103, interconnects (e.g., copper pillar, or gold stud bumps or other techniques) may be used to provide short electrical paths. In other configurations, routing may be performed through multi-layer metal structures within interposer 105.

In some implementations, optical signals generated by modulator array 103 may be transmitted using one or more optical paths. In configurations using a single wavelength per lane, optical signals may be routed to separate optical fibers, such as in a fiber bundle configuration. In configurations using multiple wavelengths, optical signals from multiple modulators may be combined onto a smaller number of optical fibers using multiplexing structures. In some implementations, optical signals may be routed within interposer 105 or substrate to another photonic device, such as a receiver chip, without the use of external optical fibers.

In some implementations, on the receive side, photodetector arrays may be configured to detect optical signals corresponding to specific wavelengths or to broader spectral ranges. In single-wavelength implementations, each photodetector may correspond to a respective optical fiber or channel. In multi-wavelength implementations, demultiplexing structures may be used to separate incoming optical signals into individual wavelength components, each of which is directed to a corresponding photodetector.

In some implementations, performance goals for the disclosed systems may include maximizing bandwidth density and total system bandwidth, while maintaining low power consumption and high efficiency. Additional goals may include minimizing latency, reducing signal loss and enabling operation within desired temperature ranges.

In some implementations, the spacing and pitch of the modulators in modulator array 103 may be determined based on electrical routing constraints, crosstalk considerations, and fabrication limits. For example, implementations may utilize a pitch of approximately 625 µm, while other implementations may reduce pitch to approximately 375 µm, 250 µm, or smaller to achieve higher density.

In some implementations, optical coupling losses may vary depending on the coupling method used. The design goal may be to achieve coupling losses as low as possible (e.g., <1dB). Edge coupling and evanescent coupling may achieve relatively low loss, while grating couplers may exhibit higher loss depending on design and fabrication.

In some implementations, thermal management may be a consideration in system design. Heat generated by electronic processing unit 101 and associated components may be managed through passive or active cooling mechanisms. In some implementations, laser source 113 may be located outside of the package to reduce thermal load within the co-packaged optics assembly and improve reliability of the assembly. Other reliability concerns, such as alignment drift, aging, or signal degradation, may be mitigated through design choices, although heat may represent the dominant consideration in many implementations.

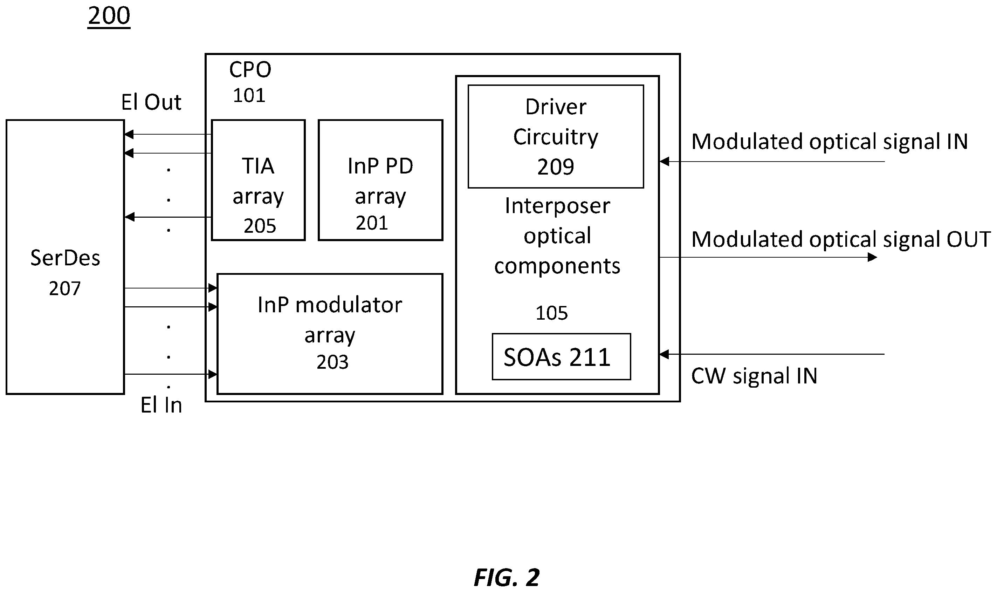

FIG. 2 (200) illustrates a top view of an example electro-optical assembly comprising a CPO PIC. Structure 200 comprises co-packaged optics module 101 and SERDES 207, which is configured to transmit optical signals. Photodetector array 201 is configured to receive optical signals. Transimpedance amplifier and/or driver circuit 205 are coupled to photodetector array 201 and SERDES 207 to amplify electrical signals. Co-packaged optics module 101 is driven by serializer/deserializer block 207 associated with the electronic integrated circuit. Electrical signals from serializer/deserializer block 207 may be routed to modulator array 203, and electrical signals generated by photodetector array 201 may be routed to serializer/deserializer block 207. Structure 200 illustrates a configuration in which transmit and receive components are arranged in a compact layout to enable high-density optical interconnects.

In some implementations, thin compound semiconductor layers forming modulator arrays 203 or photodetector arrays 201 may comprise InP, GaAs, or epitaxial layers of other materials. In some implementations, the thickness may be in a range from approximately 0.5 µm to 10 µm, and in other implementations from approximately 1 µm to 5 µm, depending on optical confinement and bonding considerations. These layers may be bonded onto a multi-layer substrate, such as interposer 105, which may comprise a low-index oxide layer, for example SiO₂-on-silicon, to improve optical confinement and mode control. Bonding may be performed using wafer-level or die-level techniques, including direct bonding, adhesive bonding, or hybrid bonding, enabling heterogeneous integration of the compound semiconductor devices with interposer 105 and associated waveguides.

In some implementations, electrical routing may be provided through interposer 105, which may comprise embedded multi-level metal interconnects configured to deliver differential radio-frequency signals and power from electronic processing unit 101 to modulator arrays 203 or to driver circuitry 209. The routing paths may be relatively short, for example less than approximately 200 µm, and in some implementations less than approximately 100 µm, and in other implementations less than approximately 50 µm, to minimize signal attenuation, parasitic capacitance and timing skew. In some implementations, routing lengths may be within a range of approximately 20 µm to 150 µm. Such short electrical paths may enable high-speed operation, for example data rates exceeding approximately 50 Gbps per lane, and in some implementations exceeding approximately 100 Gbps per lane or higher. The modulators in modulator array 203 may comprise MZMs, EAMs, differential EAMs, or a directly modulated lasers.

In some implementations, gain and driver functionality may be integrated with modulator arrays 203. Driver circuitry 209 may be implemented using compound semiconductor materials for monolithic integration or may be implemented using silicon-germanium or complementary metal-oxide-semiconductor technologies to increase voltage swing from the electronic processing unit 101. In some implementations, driver circuitry 209 may provide voltage swings greater than approximately 0.5 Vpp, and in some implementations in a range of approximately 0.5 Vpp to 2.5 Vpp, and in other implementations greater than approximately 1 Vpp. Bandwidths may exceed approximately 25 GHz, and in some implementations exceed approximately 50 GHz or 100 GHz. Semiconductor optical amplifiers may also be integrated with or positioned adjacent to modulator arrays 203 to increase the amplitude of optical signals prior to coupling into waveguides.

In some implementations, photodetector arrays 201 and transimpedance amplifiers 205 may be co-integrated on the receive side. Photodetector arrays 201 formed in indium phosphide may be configured for waveguide coupling or back-illumination. The electro-optical assembly 200 may comprise one or more semiconductor optical amplifiers (SOAs) 211 monolithically integrated before or after each modulator of the modulator array

In some implementations, the modulators in the modulator array 103 may be driven directly by serializer/deserializer circuitry 207 of the electronic processing unit 101 when the required modulation voltage is relatively low, for example less than approximately 1 Vpp. In other implementations, optional driver circuitry may be used when higher voltage swings are required to achieve the desired modulation depth or performance. Accordingly, the use of driver circuitry 209 may be dependent on the specific characteristics of the modulators and system requirements. The driver circuitry 209 may comprise InP, SiGe, and/or other materials.

In some implementations, driver circuitry 209 may be implemented using a variety of technologies, including silicon-germanium BiCMOS, complementary metal-oxide-semiconductor or compound semiconductor technologies such as indium phosphide. Silicon-germanium BiCMOS implementations may be provide lower power consumption. Indium phosphide implementations may provide higher bandwidth performance. Driver circuitry 209 may be located adjacent to or integrated with the modulator array 203 or positioned on the interposer 105 or another substrate layer.

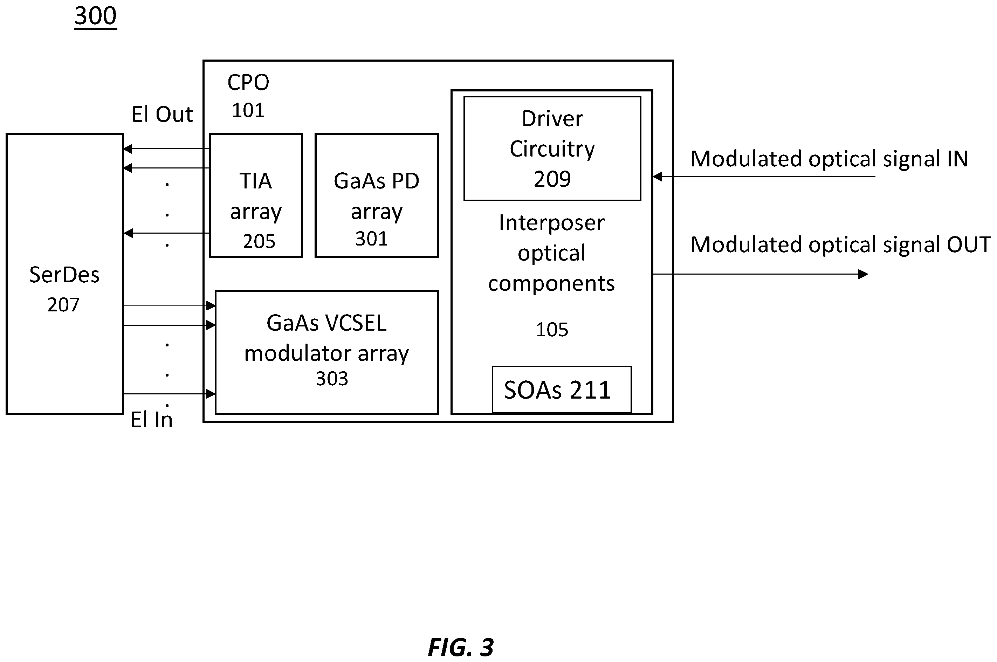

FIG. 3 (300) illustrates a top view of an alternative co-packaged optics photonic integrated circuit implemented in a different material system. Structure 300 comprises co-packaged optics module 101, photodetector array 301 and modulator array 303. Photodetector array 301 is configured to detect optical signals, and modulator array 303 is configured to generate optical signals. Transimpedance amplifier 205 and/or driver circuity 209 may be coupled to photodetector array 301 and modulator array 303. Electrical signals may be provided by serializer/deserializer block 207. Structure 300 demonstrates that modulator array 303 and photodetector array 301 may be implemented using different material systems, for example gallium arsenide, silicon-germanium, or other electro-optic materials.

Photodetector arrays 301 formed in silicon-germanium may be integrated within waveguides on the interposer 105. Transimpedance amplifiers 205 may be coupled to the photodetector arrays 301 to amplify electrical signals prior to transmission through electrical interconnects to the electronic processing unit 101. In some implementations, the transimpedance amplifiers 205 may provide transimpedance values in a range of approximately 5 to 150 kΩ, and bandwidths exceeding approximately 20 GHz, and in some implementations exceeding approximately 40 GHz or 70 GHz.

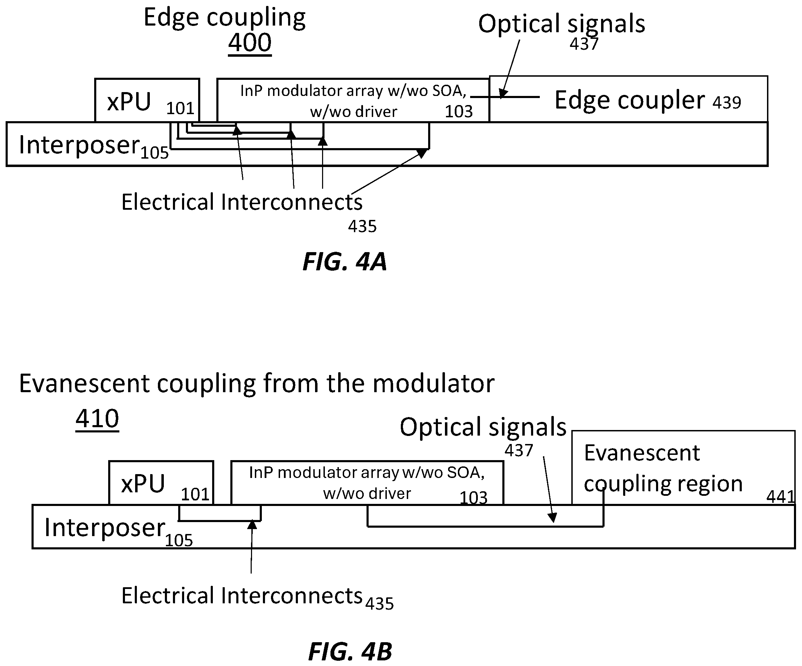

FIG. 4A (400) illustrates a transmitter configuration in which an electronic processing unit 101 is coupled to an interposer 105. Electrical interconnects 435 route electrical signals from electronic processing unit 101 to modulator array 103. Modulator array 103 generates optical signals 437 that may be coupled into an optical path via edge coupler 439. Interposer 105 may provide multi-layer routing to enable high-density electrical connectivity between electronic processing unit 101 and modulator array 103. An edge coupler may alternatively be in a modulator array, SOA, driver, or substrate. An edge coupler may be coupled to a fiber array.

Modulators 103 may comprise Mach-Zehnder modulators, electro-absorption modulators or differential electro-absorption modulators and may be supported by interposer 105 that provides electrical interconnects 435 from electronic processing unit 101. The staggered geometry may be selected according to coupling efficiency, thermal considerations and electrical routing constraints.

Edge couplers may be on the die, (e.g., InP, GaAs) or in a separate component (as passive optics) or in a Si or SiN based component. Optical signals may be launched into the interposer, for example from another die on the interposer.

FIG. 4B (410) illustrates a transmitter configuration like FIG. 4A, wherein optical coupling is achieved via an evanescent coupling region 441. Electrical signals are routed from electronic processing unit 101 through interposer 105 via electrical interconnects 435 to modulator array 103. Optical signals 437 generated by modulator array 103 may be coupled into a waveguide through evanescent coupling region 441.

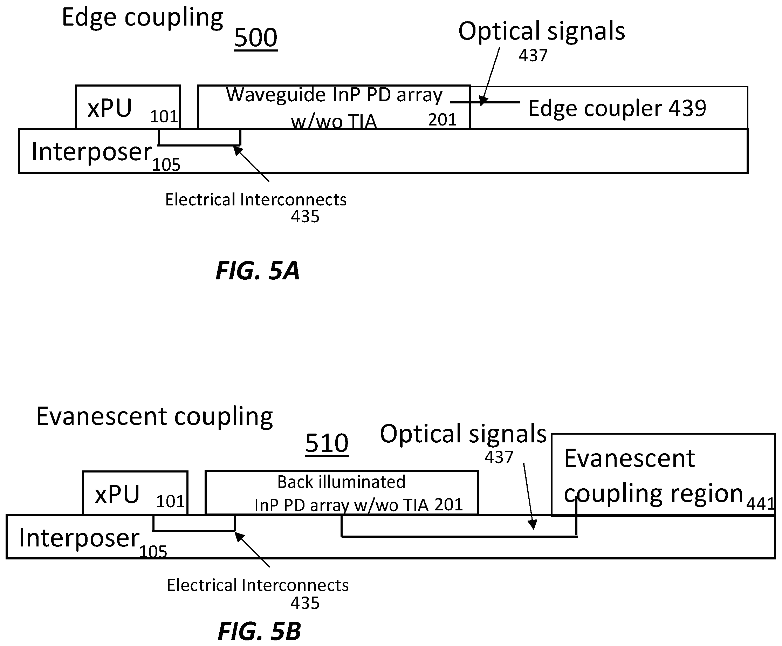

FIG. 5A (500) illustrates a receiver configuration in which optical signals 437 are coupled via edge coupler 439 into photodetector array 201. Photodetector array 201 converts optical signals 437 into electrical signals, which are routed through interposer 105 via electrical interconnects 435 to electronic processing unit 101. An edge coupler may be on or in an array chip,

FIG. 5B (510) illustrates a receiver configuration in which optical signals 437 are coupled into photodetector array 201 via evanescent coupling region 441. Photodetector array 201 converts optical signals 437 into electrical signals, which are routed through interposer 105 to electronic processing unit 101.

In some implementations, optical coupling between modulator arrays or photodetector arrays 201 and silicon photonic structures may be achieved using evanescent coupling regions 441. Evanescent coupling regions 441 may be defined by sub-wavelength gaps, for example less than approximately 300 nm, and in some implementations less than approximately 200 nm, and in other implementations in a range of approximately 50 nm to 250 nm, to enable efficient transfer of optical modes between the compound semiconductor devices and waveguides.

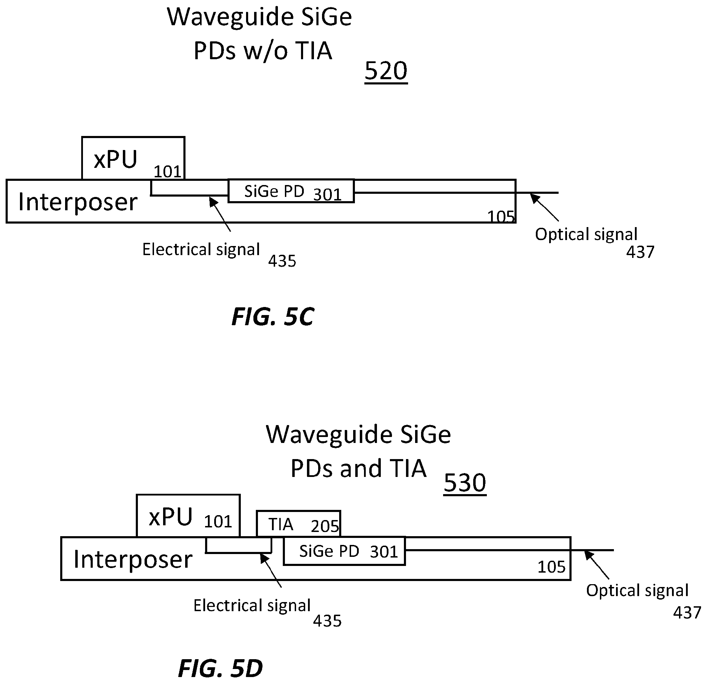

FIG. 5C (520) illustrates a receiver configuration comprising waveguide 433 integrated with photodetector array 301. Optical signals 437 propagate through waveguide 433 and are detected by photo detector array 301. Photodetector array 301 may be integrated within or on interposer 105.

SiGe photodetectors may be implemented with or without associated transimpedance amplifiers (TIAs). In certain embodiments, the output voltage swing generated by a SiGe photodetector may be sufficiently large to permit direct interfacing with downstream processing circuitry, such as an XPU, without requiring an intermediate TIA stage. In other embodiments, a TIA may be coupled between the photodetector and the XPU to provide amplification and signal conditioning. Optical input signals may be coupled into the photodetector through one or more optical coupling structures, comprising edge couplers, evanescent couplers, grating couplers, or combinations thereof. In an exemplary embodiment, an optical signal is edge-coupled into an on-chip waveguide, routed to the photodetector, converted into an electrical signal, and subsequently provided either directly to the XPU or through a TIA prior to processing. Electrical interfaces between the photodetector and the TIA and/or XPU may comprise flip-chip interfaces, gold stud bump interconnects, solder bump interconnects, hybrid bonding structures, or other electrical coupling techniques.

FIG. 5D (530) illustrates a receiver configuration like FIG. 5C, wherein photodetector array 301 is coupled to transimpedance amplifier 205. Transimpedance amplifier 205 is configured to amplify electrical signals generated by photodetector array 301 prior to transmission through interposer 105 via electrical interconnects 435.

In various embodiments, optical coupling into the photodetector may be implemented using edge-coupled waveguides, grating couplers, top-illumination structures, or combinations thereof. For example, certain embodiments may utilize edge couplers to couple optical signals from optical fibers or interposer waveguides into photonic waveguides integrated with the photodetector structure. Other embodiments may employ grating couplers configured to receive vertically incident optical signals. Electrical interconnection between photodetector arrays and associated TIAs, XPUs, or other circuitry may be implemented using bump-bond structures, flip-chip interconnects, hybrid bonding, through-substrate vias, or similar techniques.

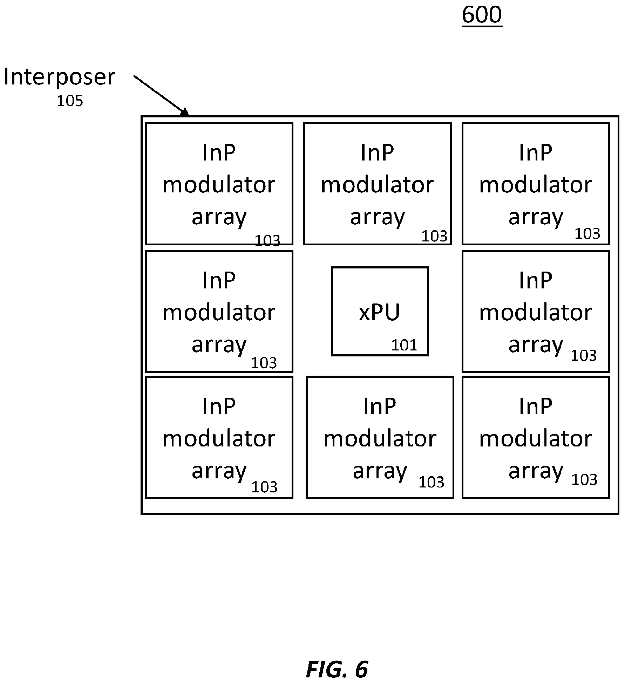

FIG. 6 (600) illustrates a CPO system in which electronic processing unit 101 is coupled to interposer 105. A plurality of modulator arrays 103 are positioned on interposer 105, while one or more photodetector arrays 301 are integrated within interposer 105. Electrical interconnects may route signals between electronic processing unit 101 and modulator arrays 103 and photodetector arrays.

In certain embodiments, optical coupling structures may be positioned along one or more edges of an interposer or substrate supporting photonic devices. For example, optical signals may be coupled into or out of the interposer using edge couplers located along any of multiple sides of the interposer. In other embodiments, grating couplers may be positioned adjacent to modulator arrays or photodetector arrays to permit vertical optical coupling. Optical routing structures, such as waveguides formed within one or more layers of the interposer, may route optical signals between coupling structures and photonic devices located at different positions on the interposer. Accordingly, optical signals need not be coupled at the physically closest edge or coupling structure but may instead be routed through intermediate waveguide layers to desired device locations.

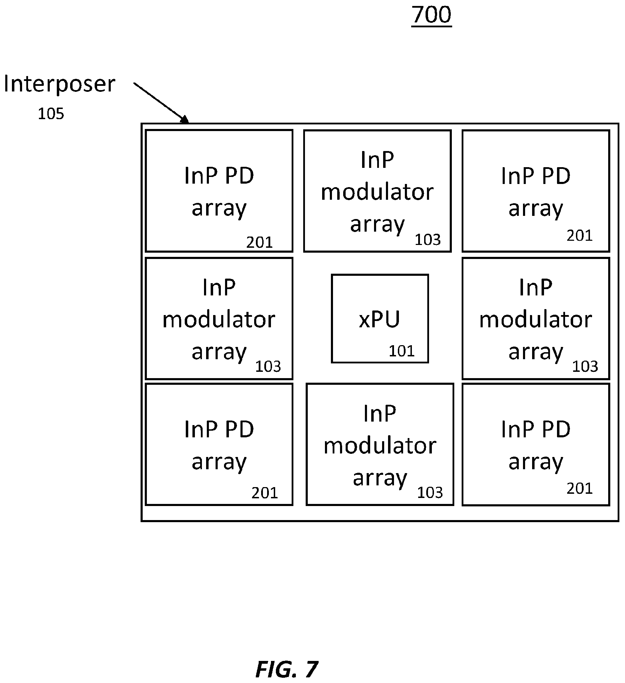

FIG. 7 (700) illustrates a CPO system in which an electronic processing unit 101 is coupled to interposer 105 supporting both modulator arrays 103 and photodetector arrays 201. Modulator arrays 103 and photodetector arrays 201 may be arranged in alternating or grouped configurations to enable bidirectional optical communication. Electrical interconnects may provide routing between electronic processing unit 101 and the optical components.

In various embodiments, interposer structures may support transmitter-only configurations, receiver-only configurations, or transceiver configurations. For example, one embodiment may include arrays of optical modulators configured to provide optical transmission functionality, while another embodiment may additionally comprise photodetector arrays positioned on the same interposer or interleaved with modulator arrays to provide combined transmit-and-receive functionality. Thus, certain embodiments may provide only optical transmission paths, whereas other embodiments may provide integrated transceiver functionality on a shared interposer structure.

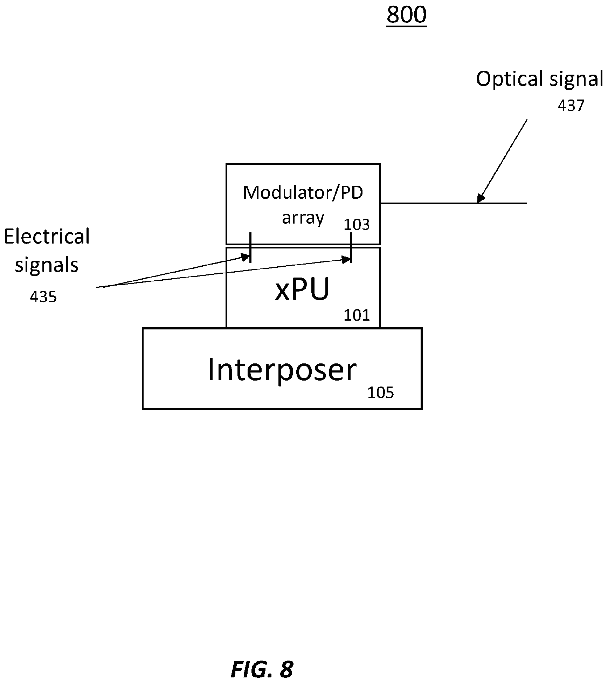

FIG. 8 (800) illustrates a three-dimensional stacked configuration in which modulator array 103 is positioned above electronic processing unit 101. Interposer 105 provides vertical electrical interconnects 435 configured to route signals from electronic processing unit 101 to modulator array 103. Optical signals 437 are generated by modulator array 103 and coupled into optical structures. The interposer 105 is below the xPU 101.

In some embodiments, an XPU may comprise electrical interconnect structures accessible from multiple surfaces of the device package. For example, electrical interfaces may be provided on upper and lower surfaces of the XPU using through-substrate vias, through-silicon vias (TSVs), redistribution layers, or similar structures. In certain embodiments, an interposer positioned beneath the XPU may function primarily as a thermal and/or mechanical support substrate while optical modulator arrays are directly flip-chip bonded onto an upper surface of the XPU. In other embodiments, the interposer may provide electrical routing between the XPU and associated photonic devices, comprising modulators and photodetectors, through conductive routing layers and vertical interconnect structures.

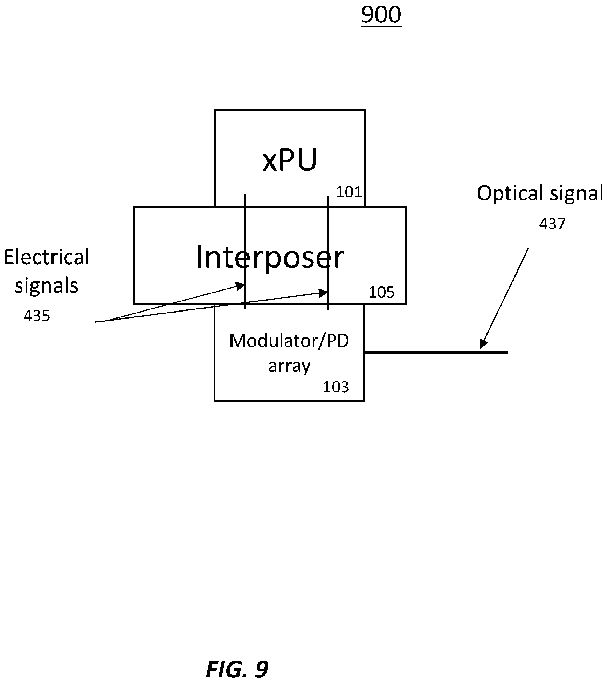

FIG. 9 (900) illustrates a side view of an example transmitter comprising a 3D stack with the modulator array 103 below the xPU 101. An interposer 105 is below the xPU 101 and above the modulator array 103. Electrical interconnects 435 are routed through interposer 105 using vertical interconnect structures to deliver signals to modulator array 103.

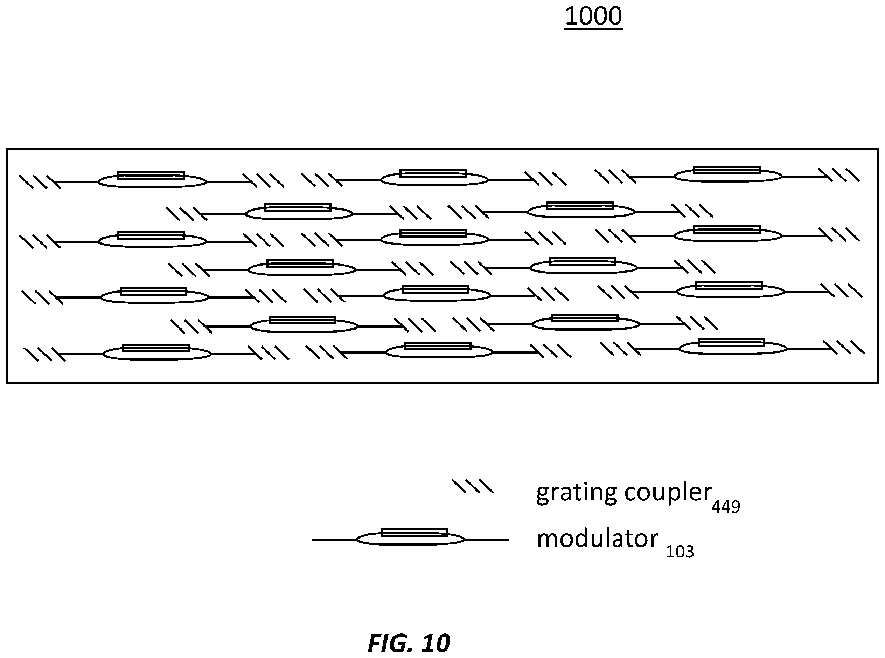

FIG. 10 (1000) illustrates a staggered modulator array system comprising a plurality of modulators of modulator array 103 arranged in a staggered configuration. The staggered arrangement increases packing density and reduces crosstalk. Optical coupling may be provided via one or more grating couplers 449 or other coupling structures. Electrical interconnects may deliver signals from an interposer to modulators 103. Optical signals may be coupled into and out of the staggered modulator array system 1000. Grating couplers 449 may support bidirectional operation with insertion loss less than approximately 2 dB, and in some implementations less than approximately 1 dB.

In various embodiments, optical modulators such as Mach-Zehnder modulators (MZMs) may comprise optical coupling structures positioned at input and output regions of each modulator device. For example, each modulator may comprise one or more grating couplers configured to couple continuous-wave (CW) optical signals into and out of the modulator. In certain embodiments, edge couplers and associated waveguide routing structures may alternatively be utilized to provide optical input and output coupling. Continuous-wave optical input signals may be distributed to one or more modulators through waveguide routing structures and optical splitting structures positioned within the photonic substrate or interposer. The modulators may then apply data modulation to the received CW optical signals.

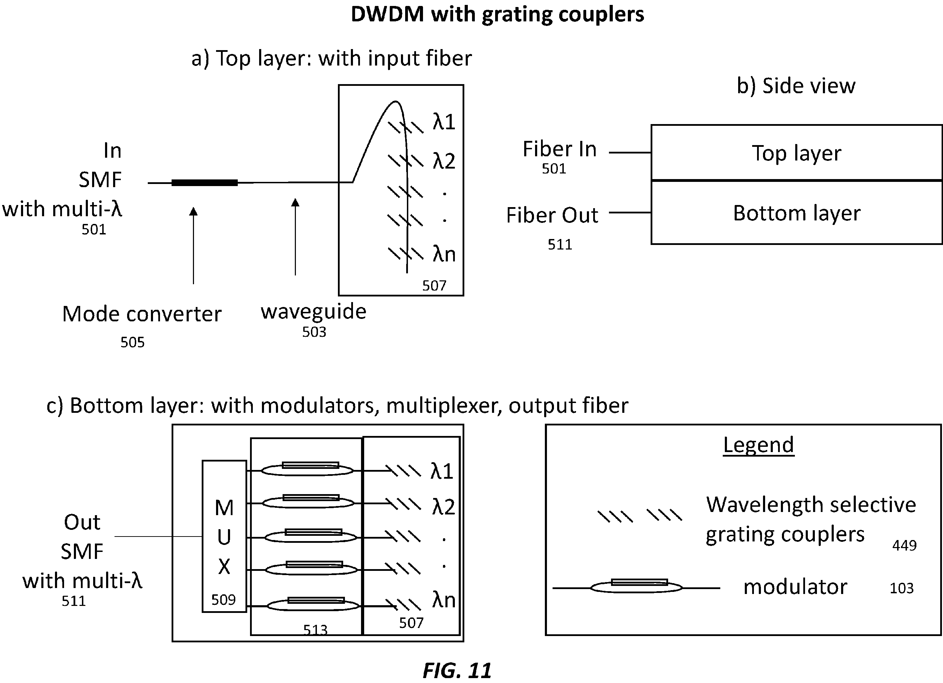

FIG. 11 illustrates an example Dense Wavelength Division Multiplexing (DWDM) modulator design, in accordance with various example implementations of this disclosure.

Input fiber 501 carries multiple continuous-wave (CW) wavelengths, which are coupled into waveguide 503 through mode converter 505. The multi-wavelength signal is then guided along waveguide 503 across grating coupler array 507. Individual wavelengths may be selectively coupled into lower-layer waveguides using the wavelength-selective grating couplers 449 of grating coupler array 507. Each resulting waveguide is routed to a corresponding modulator 103, where the signals are modulated and then recombined (e.g., multiplexed 509) onto a single waveguide and ultimately into output single-mode fiber 511.

In certain embodiments, continuous-wave optical sources may be external to the co-packaged optics (CPO) module or photonic assembly. For example, CW laser sources may be positioned off-module and optically coupled into the interposer or photonic substrate through edge couplers, grating couplers, optical fibers, or other coupling structures. Optical routing layers within the interposer may distribute the CW optical signals to multiple modulator devices. In some embodiments, optical splitting structures may divide the CW optical signal into multiple optical paths for distribution across modulator arrays. Accordingly, CW optical sources may be physically separated from the modulators and photodetectors while still optically coupled thereto through integrated routing structures.

This approach is compatible with both edge coupling and vertical coupling schemes. Modulator array 513 may comprise multiple sets of modulators 103, allowing inputs from multiple fibers carrying many wavelengths, such as in Dense Wavelength Division Multiplexing (DWDM) fiber array configurations.

While the present method and/or system have been described with reference to certain implementations, it will be understood by those skilled in the art that various changes may be made and equivalents may be substituted without departing from the scope of the present method and/or system. In addition, many modifications may be made to adapt a particular situation or material to the teachings of the present disclosure without departing from its scope. Therefore, it is intended that the present method and/or system are not limited to the implementations disclosed, but that the present method and/or system will include all implementations falling within the scope of the appended claims.
Further aspects of the invention are described in the following clauses
Clause 1. An electro-optical assembly, comprising:
   an interposer;
   a modulator array coupled to the interposer;
   a waveguide; and
   an optical coupler configured to provide communication between the modulator array and the waveguide.
Clause 2. The electro-optical assembly of clause 1, wherein the interposer comprises a silicon waveguide or a silicon nitride waveguide.
Clause 3. The electro-optical assembly of clause 1, wherein the interposer comprises a low-index oxide top layer.
Clause 4. The electro-optical assembly of clause 1, wherein the interposer comprises one or more embedded multi-level metal interconnects.
Clause 5. The electro-optical assembly of clause 1, wherein the modulator array is a high-density, staggered modulator array comprising InP or GaAs.
Clause 6. The electro-optical assembly of clause 1, wherein the modulator array is bonded to the interposer.
Clause 7. The electro-optical assembly of clause 1, wherein the modulator array comprises a Mach-Zehnder modulator (MZM), an electro-absorption modulator (EAM), a differential EAM, or a directly modulated laser.
Clause 8. The electro-optical assembly of clause 1, wherein the optical coupler is configured to enable light to travel bidirectionally between the modulator array and the waveguide via evanescent and grating coupling.
Clause 9. The electro-optical assembly of clause 1, wherein the waveguide is a silicon photonic waveguide, a silicon nitride waveguide, an InP waveguide, or a GaAs waveguide.
Clause 10. The electro-optical assembly of clause 1, wherein the electro-optical assembly comprises a top layer of SiO₂-on-silicon in a substrate configured to confine and guide a plurality of optical modes.
Clause 11. The electro-optical assembly of clause 1, wherein the electro-optical assembly comprises a driver circuitry integrated adjacent to each modulator of the modulator array.
Clause 12. The electro-optical assembly of clause 11, wherein the driver circuitry comprises InP, SiGe or CMOS.
Clause 13. The electro-optical assembly of clause 1, wherein the electro-optical assembly comprises a semiconductor optical amplifier (SOA) monolithically integrated before or after each modulator of the modulator array.
Clause 14. The electro-optical assembly of clause 1, wherein the electro-optical assembly comprises one or more photonic signal-processing blocks on the interposer.
Clause 15. The electro-optical assembly of clause 14, wherein:
   the photonic signal-processing blocks comprise one or more of a WDM multiplexer/demultiplexer, an optical filter, a polarization controller, a non-linear optical element and an adaptive component,
   the non-linear optical element is a comb generator, a parametric amplifier, or a wavelength converter, and
   the adaptive component is a tunable attenuator, a phase shifter, or a feedback equalizer.
Clause 16. The electro-optical assembly of clause 1, wherein the electro-optical assembly comprises a plurality of high-speed photodiodes co-integrated with a plurality of transimpedance amplifiers (TIAs), either using InP PD+TIA or SiGe PD+TIA configurations.
Clause 17. The electro-optical assembly of clause 1, wherein the electro-optical assembly comprises thermal management comprising one or more heat spreaders or micro-heat sinks.
Clause 18. The electro-optical assembly of clause 1, wherein the electro-optical assembly comprises on-chip monitoring photodiodes embedded in the interposer. Clause 19. The electro-optical assembly of clause 1, wherein electrical drive signals from a specialized processing unit (xPU) are routed through metal traces embedded in the interposer with a path length under 100 µm.
Clause 20. The electro-optical assembly of clause 1, wherein through-interposer vias operably couple the modulator array to an xPU die in a compact three-dimensional stack.
Clause 21. The electro-optical assembly of clause 1, wherein the modulator array is operably coupled to a dense wavelength division Multiplexing (DWDM) fiber array.
Clause 22. The electro-optical assembly of clause 17, wherein the one or more heat spreaders comprise Thermadite.

## Claims

1. An electro-optical assembly, comprising:
an interposer;
a modulator array coupled to the interposer;
a waveguide; and
an optical coupler configured to provide communication between the modulator array and the waveguide.

2. The electro-optical assembly of claim 1, wherein the interposer comprises a silicon waveguide or a silicon nitride waveguide and/or wherein the interposer comprises a low-index oxide top layer and/or wherein the interposer comprises one or more embedded multi-level metal interconnects.

3. The electro-optical assembly of one of the preceding claims, wherein the modulator array is a high-density, staggered modulator array comprising InP or GaAs and/or wherein the modulator array is bonded to the interposer and/or wherein the modulator array comprises a Mach-Zehnder modulator (MZM), an electro-absorption modulator (EAM), a differential EAM, or a directly modulated laser.

4. The electro-optical assembly of one of the preceding claims, wherein the optical coupler is configured to enable light to travel bidirectionally between the modulator array and the waveguide via evanescent and grating coupling.

5. The electro-optical assembly of one of the preceding claims, wherein the waveguide is a silicon photonic waveguide, a silicon nitride waveguide, an InP waveguide, or a GaAs waveguide.

6. The electro-optical assembly of one of the preceding claims, wherein the electro-optical assembly comprises a top layer of SiO₂-on-silicon in a substrate configured to confine and guide a plurality of optical modes.

7. The electro-optical assembly of one of the preceding claims, wherein the electro-optical assembly comprises a driver circuitry integrated adjacent to each modulator of the modulator array, wherein the driver circuitry preferably comprises InP, SiGe or CMOS.

8. The electro-optical assembly of one of the preceding claims, wherein the electro-optical assembly comprises a semiconductor optical amplifier (SOA) monolithically integrated before or after each modulator of the modulator array.

9. The electro-optical assembly of one of the preceding claims, wherein the electro-optical assembly comprises one or more photonic signal-processing blocks on the interposer.

10. The electro-optical assembly of claim 9, wherein:
the photonic signal-processing blocks comprise one or more of a WDM multiplexer/demultiplexer, an optical filter, a polarization controller, a non-linear optical element and an adaptive component,
the non-linear optical element is a comb generator, a parametric amplifier, or a wavelength converter, and
the adaptive component is a tunable attenuator, a phase shifter, or a feedback equalizer.

11. The electro-optical assembly of one of the preceding claims, wherein the electro-optical assembly comprises a plurality of high-speed photodiodes co-integrated with a plurality of transimpedance amplifiers (TIAs), either using InP PD+TIA or SiGe PD+TIA configurations.

12. The electro-optical assembly of one of the preceding claims, wherein the electro-optical assembly comprises thermal management comprising one or more heat spreaders or micro-heat sinks, wherein the one or more heat spreaders preferably comprise Thermadite.

13. The electro-optical assembly of one of the preceding claims, wherein the electro-optical assembly comprises on-chip monitoring photodiodes embedded in the interposer.

14. The electro-optical assembly of one of the preceding claims, wherein electrical drive signals from a specialized processing unit (xPU) are routed through metal traces embedded in the interposer with a path length under 100 µm and/or wherein through-interposer vias operably couple the modulator array to an xPU die in a compact three-dimensional stack.

15. The electro-optical assembly of one of the preceding claims, wherein the modulator array is operably coupled to a dense wavelength division Multiplexing (DWDM) fiber array.
